(19) Europäisches Patentamt
European Patent Office
Office européen des brevets

(11) **EP 1 766 770 B1**

(12) **EUROPÄISCHE PATENTSCHRIFT**

(45) Veröffentlichungstag und Bekanntmachung des Hinweises auf die Patenterteilung:
**19.11.2008 Patentblatt 2008/47**

(21) Anmeldenummer: **05784861.6**

(22) Anmeldetag: **11.07.2005**

(51) Int Cl.:
*H02P 7/28* (2006.01)    *H02P 7/295* (2006.01)
*H02P 7/292* (2006.01)    *H02M 5/25* (2006.01)

(86) Internationale Anmeldenummer:
**PCT/EP2005/007493**

(87) Internationale Veröffentlichungsnummer:
**WO 2006/005564 (19.01.2006 Gazette 2006/03)**

(54) **LÖSCHVORRICHTUNG FÜR EINE RÜCKSPEISENDE STROMRICHTERBRÜCKE**

QUENCHING DEVICE FOR A CONVERTER BRIDGE WITH LINE REGENERATION

DISPOSITIF D'EFFACEMENT D'UN PONT REDRESSEUR D'ALIMENTATION EN RETOUR

(84) Benannte Vertragsstaaten:
**AT BE CZ DE GB IT**

(30) Priorität: **14.07.2004 AT 11982004**

(43) Veröffentlichungstag der Anmeldung:
**28.03.2007 Patentblatt 2007/13**

(73) Patentinhaber: **Siemens Aktiengesellschaft Österreich**
**1210 Wien (AT)**

(72) Erfinder:
• **BIRIBAUER, Thomas**
**A-1220 Wien (AT)**

• **HACKL, Franz**
**A-1130 Wien (AT)**
• **HOFMÜLLER, Wilfried**
**A-2000 Stockerau (AT)**
• **PICHORNER, Heinz**
**A-3464 Pettendorf (AT)**
• **RITSCHEL, Wilhelm**
**A-1220 Wien (AT)**
• **WÖHRER, Franz**
**A-1220 Wien (AT)**

(56) Entgegenhaltungen:
EP-A- 0 802 602          US-A- 4 449 087
US-A- 4 777 581

**Beschreibung**

Die Erfindung betrifft ein Verfahren zur Steuerung einer Löschvorrichtung für eine rückspeisende Stromrichterbrücke, wobei die von einer netzsynchronen Ansteuerschaltung mit Zündimpulsen angesteuerte Stromrichterbrücke mit ihren drei Eingängen an die Phasen eines Drehstromnetzes angeschlossen ist und die beiden Ausgänge der Brücke zu einem Gleichstrommotor geführt sind, welcher im generatorischen Betrieb über die Brücke in das Drehstromnetz rückspeist, und die Löschvorrichtung von einer Auslöseeinheit angesteuert wird, von welcher Auslöseimpulse in Abhängigkeit von der Überwachung elektrischer und zeitlicher Größen abgegeben werden. Aus den Zeitverlängen der Leiterspannungen werden in US 4449087 durch Integration pseudoflüsse ermittelt und mit ihrer Hilfe Zündwinkel fürdie Thyristoren bestimmt. Außerdem betrifft die Erfindung eine en rechende Löschvorrichtung.

Bei netzgeführten Stromrichtern, wie sie z. B. in der AT 404 414 B der Anmelderin beschrieben sind, können Störungen im Spannungs- oder Stromverlauf, insbesondere Überspannungen und/oder Kommutierungsfehler zu einer Zerstörung der teuren Thyristoren bzw. Schalter einer solchen Brücke führen.

Genauer gesagt tritt bei netzgeführten Stromrichtern das grundsätzliche Problem des Wechselrichterkippens im rückspeisenden Betrieb auf. Dabei entsteht bei Netzspannungseinbruch und hinreichender Gleichspannung, z. B. einer entsprechenden Ankerspannung des Motors, ein Überstrom, der weiter zunimmt und auch nicht mehr durch den Stromrichter selbst zu löschen ist. Es kommt dann zwangsläufig zu einem Ansprechen der in der Regel vorgesehenen Sicherungen, welche die Thyristoren schützen sollen. Die Folge ist ein längerer Ausfall des Stromrichters und des davon gespeisten Motors, da es einer entsprechenden Zeit bedarf, um die Sicherungen, die üblicherweise als schnelle Halbleitersicherungen ausgebildet sind, auszutauschen. Man war daher bemüht, verschiedene, zum Teil aufwändige Vorrichtungen zur Begrenzung und Unterbrechung des Überstroms zu schaffen bzw. um ein Wechselrichterkippen entweder zu verhindern oder kontrolliert zu beenden, wie z. B. in dem genannten Patent der Anmelderin beschrieben.

Bekannt sind beispielsweise Gleichstrom-Schnellschalter, die in dem Gleichstrompfad liegen. Wenn deren sichere Funktion gewährleistet werden soll, sind jedoch zusätzlich hoch aussteuerbare Drosseln zur Begrenzung des Stromanstiegs erforderlich und dementsprechend sind die Kosten beträchtlich, abgesehen von der problematischen Dimensionierung und einer für die sichere Funktion regelmäßigen Wartung.

Es sind noch andere Verfahren zur direkten Thyristorlöschung mit Löschkondensatoren bekannt, beispielsweise die Löschung nur einer der beiden Stromrichter-Brückenhälften mit einem Kondensator, wobei der Motorstrom bis zum völligen Abbau auf Null die Ventile der zweiten Brückenhälfte noch voll belastet und dadurch nicht in allen Fällen Schutz möglich ist. Ein ähnliches Verfahren ist die Löschung beider Brückenhälften mit zwei Kondensatoren und mit je einer Spannungsbegrenzung parallel zu diesen, was jedoch Überspannungen am Motor zulässt. Die genannten Verfahren schützen außerdem nicht vor einer Überspannung bei einer Netzunterbrechung, falls zwischen Netz und Stromrichterbrücke ein Transformator liegt.

Eine Aufgabe der Erfindung liegt darin, ein Verfahren zur Steuerung einer Löschvorrichtung anzugeben, mit dem die Thyristoren eines rückspeisenden Stromrichters so schnell gelöscht werden können, dass die den Thyristoren einzeln oder dem Stromrichter insgesamt vorgeschalteten Halbleitersicherungen im Falle insbesondere eines Wechselrichterkippens vor Schmelzen oder Vorschädigung (Alterung) geschützt werden. Sofern Sicherungen vorliegen, soll deren Schmelzintegral ($i^2t$) nicht erreicht werden, bei sicherungslosem Betrieb darf das Grenzlastintegral ($i^2t$) der Thyristoren nicht erreicht werden. Überdies soll der Stromrichter vor Überspannungen geschützt werden, wie sie insbesondere bei Netzunterbrechungen, vor allem bei Betrieb mit einem Transformator, auftreten und die oft die Ursache für Kommutierungsfehler sind und in Folge zur Zerstörung der Thyristoren führen.

Diese Aufgaben werden nach dem Verfahrens-Anspruch 1 Dadurch gelöst, dass erfindungsgemäß die Verläufe von zumindest zwei Phasen des Drehstromnetzes als Funktion des Phasenwinkels über einen vorgebbaren Bereich des Phasenwinkels gemessen werden, aus dem Verlauf der beiden Phasen als Funktion des Phasenwinkels eine charakteristische Kenngröße ermittelt wird, die ermittelte Kenngröße mit einer entsprechenden, theoretischen Kenngröße verglichen wird, und bei einem Abweichen der aus den gemessenen Werten der Phasen ermittelten Kenngröße um einen vorgebbaren Wert von der theoretischen Kenngröße die Löscheinrichtung aktiviert wird.

Alternativ oder zusätzlich werden die genannten Aufgaben nach dem Verfahrens-Anspruch 10 dadurch gelöst, dass erfindungsgemäß der Motor-Ausgangsgleichstrom als Funktion der Zeit ermittelt wird, die zweite Ableitung des Ausgangsgleichstroms nach der Zeit gebildet wird, und für den Fall, dass die zweite Ableitung in einem Bereich zwischen zwei aufeinanderfolgenden Zündzeitpunkten einen Wert größer oder gleich Null annimmt, die Löschvorrichtung aktiviert wird.

Auf diese Weise können lediglich durch die Ermittlung von Messgrößen ("Ausgangsgleichstrom", "Netzspannung"), die ohnehin für die normale Funktion des Stromrichtgerätes benötigt werden, Kriterien abgeleitet werden, an Hand welcher die Löschvorrichtung aktiviert wird. Die Ermittlung dieser Kriterien gestaltet sich somit relativ einfach und kostengünstig und führt zu einer zuverlässigen Steuerung der Löschvorrichtung, die in Anspruch 15 offenbart wird.

Vorteilhafte Ausführungen und Weiterbildungen der Erfindung sind in den Unteransprüchen erläutert und werden im Rahmen der Figurenbeschreibung näher erläutert.

Die Erfindung ist im Folgenden an Hand der Zeichnung näher erläutert. In dieser zeigt

Fig. 1 in einem schematischen Blockschaltbild eine von einer Ansteuerschaltung angesteuerte Stromrichterbrücke zur Versorgung eines Gleichstrommotors samt einer Löschvorrichtung mit einer zugehörigen Auslöseeinrichtung,

Fig. 2a und 2b schematisch die Netzspannungsverläufe im Zusammenhang mit einer ersten Ausführungsform der Erfindung, und

Fig. 3 einen Stromverlauf mit einer weiteren, alternativen oder zusätzlichen Ausführungsform der Erfindung.

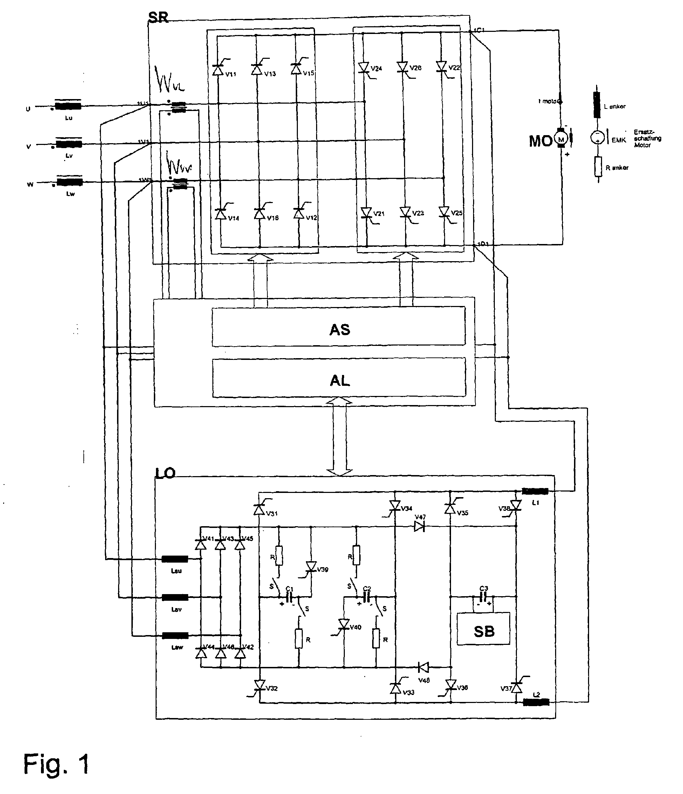

Zum näheren Verständnis der Erfindung zeigt vorerst Figur 1 eine von einer Ansteuerschaltung angesteuerte Stromrichterbrücke zur Versorgung eines Gleichstrommotors samt einer beispielhaften Löschvorrichtung mit einer zugehörigen Auslöseeinrichtung. Eine solche Löschvorrichtung eignet sich besonders gut im Rahmen der Erfindung, grundsätzlich können aber auch andere Löschvorrichtungen, die sich in hier nicht näher erläuterten Details von der gezeigten Löschvorrichtung unterscheiden, im Rahmen der Erfindung verwendet werden.

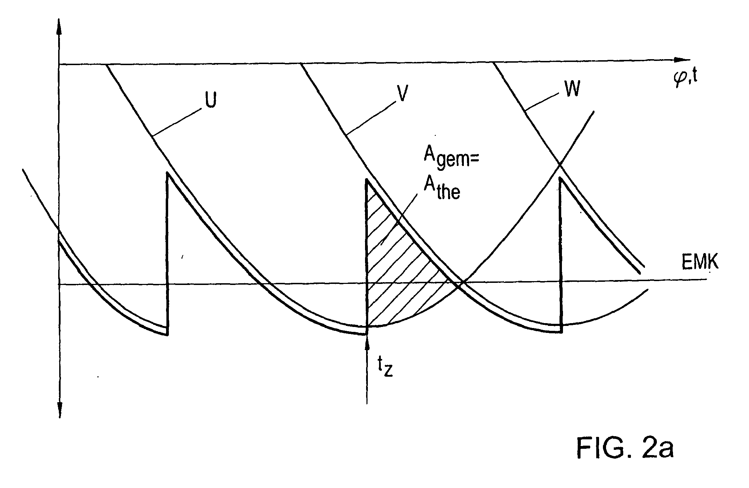

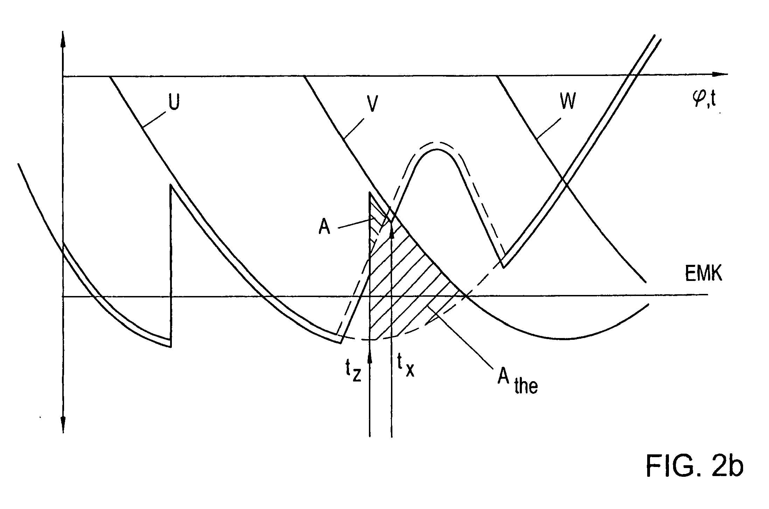

Wie Figur 1 entnehmbar, sind die drei Phasen U, V, W eines Drehstromnetzes über Kommutierungsdrosseln Lu, Lv, Lw an die Drehstromseite einer Stromrichterbrücke SRB angeschlossen. Dabei liegt üblicherweise in jeder Phase eine in der Zeichnung nicht gezeigte Netzsicherung, wie z. B. in der AT 404 414 B im Zusammenhang mit ihrer Fig. 2 beschrieben. Die gesteuerten Gleichrichterschalter V11, ..., V16 und V21, ..., V26 sind als Thyristoren oder vergleichbare Bauelemente ausgebildet.

Für beide Brücken ist eine Ansteuervorrichtung AST vorgesehen, die für ein netzsynchrones Zünden der Thyristoren sorgt. Durch Verschieben der Zündzeitpunkte kann in bekannter Weise eine Drehzahl- bzw. Momentenregelung erfolgen. Der Ansteuerschaltung AST werden die drei Phasenspannungen des Netzes und die Motorklemmenspannung sowie über zwei Stromwandler $W_U$, Ww die Phasenströme zugeführt, damit entsprechende Informationen für die Regelung und für die Ansteuerung der Stromrichterbrücke vorliegen.

Die beiden Gleichstromklemmen 1C1, 1D1 der Brücke SRB sind zu einem Gleichstrommotor MOT geführt, der im generatorischen Betrieb über die Brücke bestehend aus den Schaltern V11, ..., V16 in das Drehstromnetz rückspeist. Hier ist anzumerken, dass im Zusammenhang mit der Erfindung lediglich der generatorische Betrieb (Energiefluss ins Netz) von Interesse ist.

Auch die andere Brücke V21, ..., V26 kann rückspeisend arbeiten, wenn die Motor-EMK umgekehrt anliegt (erfordert umgekehrte Drehrichtung). Der Einfachheit halber wird hier nun der Fall betrachtet, dass die Brücke bestehend aus den Schaltern V11, ..., V16 soeben rückspeisend ist. In der soeben einspeisenden Brücke, gleich welche das gerade auch ist, kann kein Problem entstehen, das ein Eingreifen im Sinne des Löschens erfordert. Konkret erfolgt bei einem Netzspannungseinbruch in einer einspeisenden Brücke ein Rückgang des Stromes. Für das weitere Verständnis soll daran erinnert werden, dass die Ersatzschaltung als Serienschaltung der Motor-EMK, der Ankerinduktivität $L_{anker}$ und des Ankerwiderstandes $R_{anker}$ dargestellt werden kann. Der Ausgangsstrom der Brücke SRB entspricht dem eingezeichneten Motorstrom $I_{anker}$.

Die beispielhaft im Sinne der Erfindung ausgebildete und wirkende Löschvorrichtung LOV besitzt für jede Brückenhälfte V11, V13, V15 bzw. V14, V16, V12 (bei umgekehrter EMK für V21, V23, V25 bzw. V24, V26, V22) einen Löschkondensator C1 bzw. C2, von welcher jeder, wie weiter unten noch zu beschreiben ist, auf die eingezeichnete Polarität aufgeladen wird. Der Pluspol bzw. der Minuspol der Kondensatoren C1 und C2 ist in der dargestellten Weise über Thyristoren V31, V32 und V34, V33 mit den Gleichspannungsanschlüssen 1C1 und 1D1 der Stromrichterbrücke SRB verbunden, im vorliegenden Fall über Kommutierungsdrosseln L1, L2. Der Minuspol von C1 bzw. der Pluspol von C2 ist über einen Thyristor V39 und drei Dioden V41, V43, V45 bzw. über einen Thyristor V40 und drei Dioden V44, V46, V42 mit den Wechselstromanschlüssen 1U1, 1V1, 1W1 der Stromrichterbrücke SRB verbunden. In den Verbindungen eingezeichnete Drosseln Lsu, Lsv, $L_{SW}$ begrenzen den Stromanstieg, es kann sich um Luftspulen oder parasitäre (Leitungs)induktivitäten handeln.

Die gezeigte Löschvorrichtung weist weiters einen Schutzkondensator C3 auf, dem ein Spannungsbegrenzer SBG parallel geschaltet ist. Der Minuspol des Schutzkondensators C3 ist über die Thyristoren V35, V36 und der Pluspol über die Thyristoren V38, V37 mit den Gleichspannungsklemmen 1C1, 1D1 der Brücke SRB verbunden. Anzumerken ist, dass - im Gegensatz zu den Löschkondensatoren C1, C2 - der Schutzkondensator C3 immer mit einer Spannung derselben Polarität beaufschlagt ist und dass die Thyristoren V35, ..., V38 auch durch Dioden ersetzt werden können, falls die Summe der Ladespannungen von C1 und C2 kleiner als die Vorspannung von C3 ist.

Die Gleichspannungsseite der in einer Brückenschaltung angeordneten Dioden V41, ..., V46 ist über Dioden V47 bzw. V48 mit dem Eingang des Spannungsbegrenzers SBG und mit dem Schutzkondensator C3 verbunden. Sie ermöglichen im Verlauf des Löschvorganges den Stromabbau in den Kommutierungsdrosseln einerseits und im Normalbetrieb der Stromrichterbrücken (motorisch und generatorisch) das Übernehmen von transienten Überspannungen aus dem Netz und von Kommutierungs-Spannungsspitzen vom Stromrichter selbst.

Im Folgenden soll zunächst der Löschvorgang (für die in der Zeichnung angegebene Polung der Motor-EMK) erläutert werden, wobei gemäß der Zeichnung geladene Löschkondensatoren C1, C2 vorausgesetzt werden. Deren Laden wird weiter unten erläutert.

Bei Zündung der Lösch-Tyhristoren V31, V33 und V39, V40 durch die Auslöseeinheit ALE kommutieren die Ströme sowohl von der oberen Halbbrücke V11, V13, V15 in den Kondensator C1, als auch von der unteren Halbbrücke V14, V16, V12 in den Kondensator C2, wodurch alle Ströme im rückspeisenden Stromrichter V11, ..., V16 sofort gelöscht werden. Gleichzeitig mit der Abgabe der Löschimpulse (Zündimpulse für die Lösch-Thyristoren) werden auch die Zündimpulse für die Brücke SRB gesperrt.

Die Spannungen an den Kondensatoren C1, C2 schwingen durch den Motorstrom um, bis dieser über die kurz vorher gezündeten Thyristoren V35 und V37 in den am Spannungsbegrenzer SBG liegenden Kondensator C3 kommutiert. Falls die Spannung an C3 noch nicht den Begrenzungspegel des Begrenzers SGB erreicht hat, wird er durch den Motorstrom dahin aufgeladen. Anzumerken ist hier, dass durch die Thyristoren V32, V34, V36 und V38 Ströme nur bei umgekehrter Motor-EMK fließen.

Im Folgenden wird noch näher auf den Spannungsbegrenzer SBG und dessen Funktion eingegangen, wobei vorausgesetzt werden soll, dass die Motorspannung (Spannung an den Motor- bzw. Geräteklemmen) durch den Löschvorgang kurzzeitig, etwa 1ms, umgepolt wird. Ist die ursprüngliche Motorspannung wieder erreicht, so ist der Motorstrom gegenüber seinem Anfangswert zum Löschzeitpunkt leicht gestiegen. Der Strom in der Ankerinduktivität des Motors wird erst durch eine höhere Spannung bis auf Null abgebaut und diese Spannung muss durch den Spannungsbegrenzer SBG im Sinne einer Begrenzung auf einen Maximalwert geregelt werden.

Die Begrenzung erfolgt in bekannter Weise durch gesteuertes Anschalten von Ballastwiderständen an die Eingangsklemmen des Begrenzers SBG und somit an den Schutzkondensator C3. Die Ballastwiderstände werden je nach Spannungshöhe in unterschiedlichem Takt zugeschaltet, wobei elektrische Energie in Wärmeenergie umgewandelt wird. De facto liegt z. B. ein Zweipunktregler mit etwa 10 % Hysteresis vor, der die Ballastwiderstände ein- und abschaltet. Um eine höhere Summen-Löschspannung zu ermöglichen, kann der Spannungsbegrenzer SBG erst während des Umschwingens der Kondensatoren C1, C2 über die Thyristoren V35, ..., V38 zugeschaltet werden. Es könnten hier auch vier Dioden verwendet werden, aber da diese notwendigerweise einen Brückengleichrichter mit C3 bilden, würde die genannte Summen-Löschspannung am Anfang Gleichrichtung den Wert der momentanen Spannung von C3 überschreiten und einen erheblichen (unbegrenzten / schädigenden Stromstoß) verursachen. Deshalb erfolgt der Einsatz von vier Thyristoren, die etwa zum Zeitpunkt des Nulldurchganges der Kondensatorspannungen C1 und C2 gezündet werden. Dann ist nämlich die Gefährdung nicht mehr gegeben, weil der Motorstrom, der wie schon oben beschrieben in den Begrenzer kommutiert, vorgegeben (bzw. eingeprägt oder quasi konstant) ist. Der als Schutzkondensator bezeichnete Kondensator C3 könnte bei Verwendung eines anderen Begrenzers SBG auch entfallen, wobei hier z. B. spannungsabhängige Widerstände oder Zenerdioden in Frage kämen.

Der Spannungsbegrenzer SBG ist jedoch ständig über die bereits genannten Dioden V47, V48 an die Diodenbrücke V41, ..., V46 angeschlossen. Dies ermöglicht es, dass auch sämtliche von dem Netz kommende Überspannungen begrenzt werden. Beispielsweise können erhebliche Überspannungen bei Abschalten eines vorgeschalteten Transformators unter Last auftreten. Darauf wird weiter unten noch näher eingegangen.

Um an den genannten Widerständen des Spannungsbegrenzers SBG eine Dauerverlustleistung zu vermeiden, kann dieser einen weiteren Schalter mit einer etwas tieferen Spannungsschwelle aufweisen, bei welchem die angetakteten ("gechoppten") Widerstände bzw. ein Widerstand einen wesentlich höheren Widerstandswert besitzen bzw. besitzt, als die genannten Werte des Spannungsbegrenzers.

Dazu sei bemerkt, dass z. B. bei einer praktischen Ausführungsform der gechoppte Widerstand effektiv 250 mOhm besitzt. Die Realisierung erfolgt parallel durch vier IGBT-Schalter und vier Widerstände mit je 1 Ohm. Durch jeden Widerstand fließt im Begrenzungsfall ein Strom von 900 A.

Die beiden Löschkondensatoren C1, C2 müssen auf einen Teil - typischerweise 0,5 bis 0,9 - des Scheitelwerts der verketteten Netzspannung geladen werden. Die beiden Kondensatoren C1 und C2 sind nach einem Löschvorgang umgekehrt geladen. Durch die nachfolgend beschriebene Schaltung erfolgt also strenggenommen zuerst eine Entladung bis Null und erst danach eine Aufladung. Es ist für das Prinzip der Erfindung gleichgültig, auf welche Weise das Laden der beiden Kondensatoren erfolgt, doch wird im folgenden eine praxisbewährte Möglichkeit einer Ladeschaltung, integriert in die gesamte Schaltung der Löschvorrichtung - beschrieben. Diese weist für jeden Kondensator C1 bzw. C2 zwei Ladewiderstände R1, R2 bzw. R3, R4 auf, die zum Pluspol - R1, R3 - bzw. zum Minuspol - R2, R4 -der Brückenschaltung V41..V46 führen. Schalter, S1, S2, für C1 und S3, S4 für C2, die in Serie mit den Ladewiderständen R1, R2 und R3, R4 liegen, werden von einem nicht gezeigten Zweipunktregler gesteuert. Das Laden ist nur möglich, wenn die Löschthyristoren ausgeschaltet sind. Im übrigen wird bei dieser Schaltung dadurch eine doppelte Spannungsbelastung der Thyristoren V31 und V33, bzw. V32 und V34 vermieden.

Im Löschfall, müssen unmittelbar nach der Zündung der Löschthyristoren während des Umschwingens der Spannungen an den Löschkondensatoren C1 und C2 diese von der Ladeschaltung durch die vorhin genannten Halbleiterschalter S1 .. S4 getrennt werden, um zu verhindern, dass die Löschthyristoren nach dem erfolgreichen Stromabbau durch den Ladestrom leitend bleiben. Dadurch würde nämlich ein weiterer Ladevorgang verhindert werden und es käme folglich zu einer Überlastung der Ladewiderstände R1, ..., R4. Sobald die Kondensatoren C1 und C2 wieder hinreichend geladen sind, kann ein neuer Löschvorgang erfolgen, wobei jedoch die Wiederholfrequenz von Löschvorgängen bzw. die Anzahl von Löschvorgängen innerhalb eines bestimmten Zeitraumes durch die Dimensionierung der Schaltung, insbesondere der Ladewiderstände und des Spannungsbegrenzers bestimmt wird.

Die Steuerung der gesamten Schaltung kann durch eine analoge Schaltung mit Mikroprozessor-Unterstützung zur Kommunikation mit dem Stromrichter erfolgen. Im folgenden soll auf das erfindungsgemäße Verfahren für eine "Auslöseeinheit für eine Thyristorlöscheinrichtung" näher eingegangen werden. Die Auslösung der Thyristorlöscheinrichtung erfolgt dabei an Hand gemessener Spannungen und Ströme und/oder Zeiten, die beispielsweise durch eine geeignete Software ermittelt werden.

Bei einer ersten Variante des erfindungsgemäßen Verfahrens werden die Verläufe von zumindest zwei Phasen, im Folgenden der beiden Phasen U, V des Drehstromnetzes als Funktion des Phasenwinkels φ über einen vorgebbaren Bereich des Phasenwinkels φ gemessen. Erfindungsgemäß wird aus dem Verlauf dieser beiden Phasen U, V als Funktion des Phasenwinkels φ eine charakteristische Kenngröße ermittelt, wobei die ermittelte Kenngröße $A_{gem}$ mit einer entsprechenden, theoretischen Kenngröße $A_{the}$ verglichen wird; auf die Ermittlung der theoretischen Kenngröße wird dabei weiter unten noch eingegangen.

Bei einem Abweichen der aus den gemessenen Werten der Phasen U, V ermittelten Kenngröße $A_{gem}$ um einen vorgebbaren Wert von der theoretischen Kenngröße wird die Löscheinrichtung LOV aktiviert. Mathematisch lässt sich diese Bedingung auch formulieren als

$$A_{gem} < k \bullet A_{the} \; .$$

Dies bedeutet, dass die Löschvorrichtung dann aktiviert wird, wenn die gemessene Kenngröße $A_{gem}$ um einen bestimmten Betrag kleiner ist als die theoretische Kenngröße $A_{the}$.

Konkret ist die Situation in Figur 2a und 2b näher dargestellt. Die Figur 2a zeigt die theoretischen Verläufe der Phasen U, V, W (Netzsinus), mit dicker Linie (leicht versetzt) eingezeichnet den sich daraus ergebenden theoretischen, idealen Spannungsverlauf am Ausgang des Stromrichters, der sich bei einer ordnungsgemäßen Kommutierung ergeben würde. Weiters eingezeichnet ist die momentane EMK des Motors.

Diese Kommutierung auf die nächste Phase, d.h. von Phase U auf Phase V, sollte in etwa beim Zündzeitpunkt $t_z$ stattfinden. Im in Figur 2b gezeigten Beispiel findet dies nicht statt, weil die Netzspannung in der Phase U einen großen Einbruch (strichlierte Linie) aufweist, sodass zwar ein Wechsel auf das neue Ventil (Phase V) stattfindet und nun über diese Phase V Strom fließt, aber das alte Ventil (Phase U) nicht gelöscht wird und über diese Phase nach wie Strom fließt. Aus diesem Grund ergibt sich der abnormale durchgezogen (mit dicker Linie) dargestellte Verlauf der Spannung am Ausgang des Stromrichters mit den möglicherweise daraus entstehenden nachteiligen Effekten.

Zum Zeitpunkt $t_x$ kann der Strom nicht vollständig auf Phase V kommutieren und fließt in Phase U weiter, da die Sperrspannungszeitfläche $A_{gem}$ viel zu klein war.

Mit der ersten Variante der besprochenen Erfindung kann ein solches Fehlverhalten vorzeitig erkannt und die Löschvorrichtung LOV aktiviert werden. Konkret wird dabei bei der vorliegenden Variante als Kenngröße eine Fläche $A_{gem}$, $A_{the}$ ermittelt, welche von den Verläufen der Phasen U, V begrenzt wird, wobei die Fläche zwischen einem vorgebbaren unteren Phasenwinkel $\varphi_{min}$ und einem vorgebbaren oberen Phasenwinkel $\varphi_{max}$ berechnet wird.

Die Kenngrößen ergeben sich somit entsprechend

$$A_{gem,the} = \int_{\varphi_{min}}^{\varphi_{max}} (V - U) d\varphi \; .$$

Typische sinnvolle Werte sind ergeben sich, wenn die untere Grenze des Phasenwinkels $\varphi_{min}$ dem Zündwinkel $\varphi_z$ bzw. Zündzeitpunkt $t_z$ für einen Zündimpuls zur Kommutierung von der ersten Phase U auf die zweite Phase V entspricht.

Eine Integration findet sinnvoller Weise nur in jenen Bereich statt, in denen V > U gilt.

Die Kommutierung findet aus dem Grund nicht statt, da die Fläche Sperrspannungszeitfläche $A_{gem}$ zu klein ist, da das abkommutierende Thyristorpaar eine Mindest-Sperrspannungszeitfläche $A_{gem}$ benötigt, damit die Ladungsträger in den Thyristoren ausgeräumt werden und die Thyristoren sperrfähig werden. Wenn diese Mindest-Fläche nicht vorhanden ist, kann der Übergang von einem Thyristorpaar auf das nächste ("Kommutierung") nicht stattfinden. Das alte Thyristorpaar bleibt leitend. Da in dieser Phase aber die Netzspannung Richtung Null und dann ins Positive geht, wird der Strom in diesem Pfad rasch ansteigen und zum Sicherungsfall führen. Der Löschvorrichtung lenkt bei rechtzeitiger Aktivierung diesen stark ansteigenden Strom zunächst in den Löschkondensator um und baut ihn in weiterer Folge bis auf Null ab.

Die obere Grenze $\varphi_{max}$ entspricht im Wesentlichem dem Wert des Phasenwinkels, bei dem die erste Phase U und die zweite Phase V den selben Spannungswert aufweisen.

Bei einem Zündwinkel von $\varphi_z = 150°$ endet die Sperrspannungsfläche $A_{gem}$ bzw. $A_{the}$ 30° nach dem Zündwinkel. Aber auch generell, d.h. für einen beliebigen Zündwinkel lässt sich angeben, dass für die Integration eine obere Grenze für den Phasenwinkel von maximal 30° nach dem Zündwinkel $\varphi_z$ ausreicht. Falls sich bis zu diesem Zeitpunkt noch keine im Vergleich zur theoretischen Sperrspannungsfläche ausreichende Fläche ergibt, so hat die Kommutierung auf keinen Fall ordnungsgemäß stattgefunden und es wird die Löschvorrichtung aktiviert, um den Aufbau eines Überstroms zu verhindern.

Wie bereits erwähnt, wird die Löschvorrichtung LOV aktiviert, wenn die gemessene Fläche $A_{gem}$ um einen bestimmten Betrag kleiner als die theoretische Fläche $A_{the}$ ist. In der Praxis hat es sich dabei bewährt, für den oben genannten Faktor k einen Wert von 0,5 anzusetzen. Unter Berücksichtigung dieses Zusammenhanges kann der Aufbau eines Überstroms zuverlässig verhindert werden.

Schließlich sei noch erwähnt, dass zur Berechnung der theoretische Fläche $A_{the}$ für die Verläufe der Phasen U, V Cosinus- oder Sinusverlauf für die Phasenwinkel-Abhängigkeit angenommen wird.

Für die Berechnung Berechnung der theoretischen Fläche $A_{the}$ werden die Verläufe von zwei aufeinanderfolgenden Phasen verwendet, aber alle 3,3ms (=1/6 der Netzperiode) werden 2 andere Phasen verwenden, a Also zuerst U und V, dann V und W, dann W und U usw.

Eine weitere, zweite Variante eines erfindungsgemäßen Verfahrens zum Aktivieren der Löschvorrichtung sieht vor, dass der Motor-Ausgangsgleichstrom $i_A$ (weiter oben in der Beschreibung auch als $I_{motor}$ bezeichnet) als Funktion der Zeit ermittelt wird, die zweite Ableitung des Ausgangsgleichstroms $i_A$ nach der Zeit gebildet wird, und für den Fall, dass die zweite Ableitung in einem Bereich zwischen zwei aufeinanderfolgenden Zündzeitpunkten $t_{z1}$, $t_{z2}$; $t_{z2}$, $t_{z3}$; $t_{z3}$ einen Wert größer oder gleich Null annimmt, die Löschvorrichtung LOV aktiviert wird.

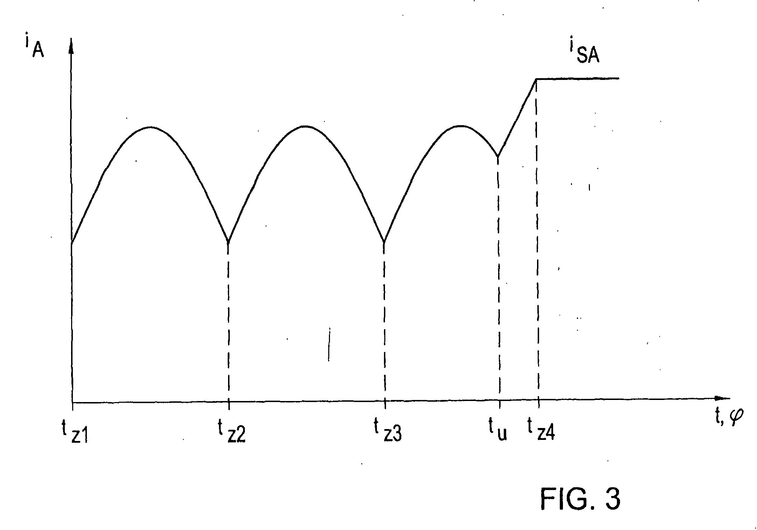

Figur 3 zeigt einen beispielhaften Verlauf des Motor-Ausgangsgleichstrom iA als Funktion der Zeit t bzw. der Phase $\varphi$. Zwischen den Zündzeitpunkten $t_{z1}$ und $t_{z2}$ bzw. $t_{z2}$ und $t_{z3}$ zeigt der Verlauf von $i_A$ einen typischen Verlauf, lediglich zu den Zündzeitpunkten $t_{zi}$, mit i = 1,2, 3 ändert sich der Verlauf abrupt; dies ist allerdings normal, da zu diesem Zeitpunkt ein neues Thyristorpaar gezündet wird. Zu diesem Zeitpunkt wird die Löschvorrichtung nicht aktiviert.

Zeigt allerdings der Stromverlauf einen untypischen Verlauf, wie dies zum Zeitpunkt tu der Fall ist - zu diesem Zeitpunkt ändert sich der Verlauf von $i_A$ als Funktion der Zeit abrupt, obwohl dieser Zeitpunkt tu nach dem Zündzeitpunkt $t_{z3}$ aber noch vor dem nächsten Zündzeitpunkt liegt -, so handelt es sich dabei um keinen ordnungsgemäßen Zustand des Stromrichters, da hier kein neues Thyristorpaar gezündet wird. Daher wird zu diesem Zeitpunkt die Löschvorrichtung LOV aktiviert.

Für jede Stromkuppe muss also gelten, dass $d^2 i_A/dt^2 < 0$. Ist dies nicht der Fall, so muss davon ausgegangen werden, dass in Folge eines Einbruchs der Netzspannung sich in kurzer Zeit ein Überstrom bilden wird, und die Löscheinrichtung kann bereits vor Erreichen eines Überstroms aktiviert werden.

Variante 1 und Variante 2 eignen sich getrennt zur Steuerung der Löschvorrichtung, vorteilhaft ist es allerdings, wenn beide Varianten gleichzeitig verwendet werden. Beide Varianten eigen sich dazu, die Löscheinrichtung bereits zu aktivieren, bevor ein Überstrom erreicht wird.

Variante 1 eignet sich besonders zum Erkennen des Aufbaus eines Überstroms zu einem Zeitpunkt um den Zündzeitpunkt herum, während sich die Variante 2 vor allem in einem Bereich zwischen zwei Zündzeitpunkten eignet.

Dabei kann bei Variante 2 - egal ob zusammen mit oder unabhängig von Variante 1 - der Ausgangsgleichstrom $i_A$ direkt motorseitig gemessen werden, oder was in vielen Fällen einfacher realisierbar ist und vergleichbar gute Ergebnisse liefert, wird der Ausgangsgleichstrom $i_A$ aus zumindest zwei Netzströmen abgeleitet.

Durch die Varianten 1 und/oder 2 wird, wie bereits erwähnt, die Löscheinrichtung bereits aktiviert, bevor ein Überstrom auftreten kann. Dadurch werden alle Betriebsmittel wie Motoren, Sicherungen, Thyristoren, Schütze, etc. bestmöglich geschützt.

Im Sinne eines unterbrechungsfreien Betriebes ist es allerdings notwendig, dass es zu keinen Fehlauslösungen kommt, die Löschvorrichtung als nicht ohne Grund ausgelöst wird. Falls die Varianten 1 und/oder 2 dahingehend ausgelegt werden, dass sie die Löschvorrichtung nur dann aktivieren, wenn eine Kommutierung sicher nicht möglich ist - beispielsweise durch entsprechende Wahl des Parameters k in Variante 1 -, dann ist es zusätzlich noch günstig, wenn eine weitere Absicherung gegeben ist, falls die Kommutierung doch versagt.

Dazu ist weiters vorgesehen, dass der Motor-Ausgangsgleichstrom $i_A$ ermittelt wird und die Löschvorrichtung bei einem Überschreiten eines vorgebbaren Schwellwertes $i_{AS}$ des überwachten Ausgangsgleichstroms aktiviert wird.

Ein typischer Wert für diesen Schwellwert liegt dabei bei dem zweieinhalb bis dreifachen Nennstrom der Stromrichterbrücke SRB (siehe Figur 3).

Abschließend sind noch einige Beispiele von Betriebs(Fehl)zuständen gegeben, welche durch die erfindungsgemäße Löschvorrichtung beherrscht werden.

Bei Blitzeinschlägen in Hoch- oder Mittelspannungseinrichtungen werden Schutzfunkenstrecken oder gasgefüllte Überspannungs-Schutzelemente gezündet. Diese brennen dann bis zum nächsten Strom-Nulldurchgang. Dadurch entsteht ein niederohmiger Netzspannungseinbruch mit der Dauer von 3 bis 20 ms. Es kann aber auch zu einem längeren Ausfall der Netzspannung kommen, bei dem ein oder mehrere Transformatoren oder sonstige Verbraucher das Netz niederohmig auf Null halten.

Bei einem Kurzschluss an einem parallelen Stromkreis am gleichen Netz entsteht zuerst ein Netzspannungs-Einbruch. Daraufhin schmilzt die zugeordnete Sicherung und trennt den fehlerhaften Stromkreis vom Netz. Es erfolgt auf diese Weise danach ein kurzer Überspannungs-Impuls, wobei die Dauer und Stärke des Einbruchs von der Netzimpedanz und dem Fehlerstrom abhängen.

Weitere Möglichkeiten für niederohmige Netzeinbrüche sind alle Arten von Kurzschlüssen am speisenden Netz.

Bei den genannten Beispielen, die alle niederohmige Netzeinbrüche betreffen, und bei gleichzeitiger Rückspeisung über den Stromrichter in das selbe Netz, steigt der Motorstrom sofort entsprechend der EMK und der Ankerinduktivität plus Netzimpedanz an, bis die Auslöseeinheit die Löscheinrichtung zum Abschalten auffordert. Die durchschnittliche Abschaltzeit, d. h. die Zeit bis der Motorstrom auf Null gesunken ist, beträgt etwa 5 ms. Allfällige Überspannungsspitzen bei Netzwiederkehr werden wie oben beschrieben begrenzt.

Bei dem Abschalten eines Hauptschützes direkt vor dem Stromrichter müssen sich die Kommutierungsinduktivitäten und die Ankerinduktivität entladen können. Dies wird durch die immer im Eingriff befindliche Netzspannungsbegrenzung wie vorhin beschrieben erreicht. Es kommt dabei zu keinem Wechselrichterkippen, ohne einen solchen Überspannungsschutz aber meistens zu einem Querzünden. Der Abbau der Energie findet hauptsächlich in dem Hauptschütz statt, was jedoch allein schon wegen der Kontaktabnutzung zu vermeiden ist.

Bei dem Abschalten eines speisenden Transformators, z. B. auf Mittelspannungsebene, tritt durch den höheren Innenwiderstand des Netzes keine signifikante Stromerhöhung (beim Wechselrichterkippen) auf. Bestimmte Thyristoren im Stromrichter löschen jedoch nicht mehr und ein Querzünder ist die Folge. Diese Bedingung wird gleichfalls rechtzeitig erkannt und die Löschvorrichtung veranlasst ein Abschalten des Stroms. Allfällige Überspannungen durch das Entmagnetisieren des genannten Transformators werden wiederum durch die Löschvorrichtung (Diodenbrücke V41, ..., V46 über V47, V48 an C3 parallel zum Spannungsbegrenzer) begrenzt.

## Patentansprüche

**1.** Verfahren zur Steuerung einer Löschvorrichtung (LOV) für eine rückspeisende Stromrichterbrücke (SRB), wobei die von einer netzsynchronen Ansteuerschaltung (AST) mit Zündimpulsen angesteuerte Stromrichterbrücke mit ihren drei Eingängen (1U1, 1V1, 1W1) an die Phasen (U, V, W) eines Drehstromnetzes angeschlossen ist und die beiden Ausgänge (1C1, 1D1) der Brücke zu einem Gleichstrommotor (MOT) geführt sind, welcher im generatorischen Betrieb über die Brücke in das Drehstromnetz rückspeist, und die Löschvorrichtung von einer Auslöseeinheit (ALE) angesteuert wird, von welcher Auslöseimpulse in Abhängigkeit von der Überwachung elektrischer und zeitlicher Größen abgegeben werden,

**dadurch gekennzeichnet, dass**

nach Abgabe eines Zündimpulses die Verläufe von zumindest zwei Phasen (U, V) des Drehstromnetzes als Funktion des Phasenwinkels ($\varphi$) über einen vorgebbaren Bereich des Phasenwinkels ($\varphi$) gemessen werden, aus dem Verlauf der beiden Phasen (U, V) als Funktion des Phasenwinkels ($\varphi$) eine charakteristische Kenngröße ermittelt wird, die ermittelte Kenngröße ($A_{gem}$) mit einer entsprechenden, theoretischen Kenngröße ($A_{the}$)verglichen wird, und bei einem Abweichen der aus den gemessenen Werten der Phasen (U, V) ermittelten Kenngröße ($A_{gem}$) um einen vorgebbaren Wert von der theoretischen Kenngröße die Löscheinrichtung (LOV) aktiviert wird.

**2.** Verfahren nach Anspruch 1, **dadurch gekennzeichnet, dass** die Kenngröße eine Fläche ($A_{gem}$, $A_{the}$) ist, welche von den Verläufen der Phasen (U, V) begrenzt wird, wobei die Fläche zwischen einem vorgebbaren unteren Phasenwinkel ($\varphi_{min}$) und einem vorgebbaren oberen Phasenwinkel ($\varphi_{max}$) berechnet wird.

**3.** Verfahren nach Anspruch 2, **dadurch gekennzeichnet, dass** die Fläche ($A_{gem}$, $A_{the}$) nach der Formel

$$A_{gem,the} = \int_{\varphi_{min}}^{\varphi_{max}} (V - U)\, d\varphi$$

berechnet wird.

**4.** Verfahren nach Anspruch 2 oder 3, **dadurch gekennzeichnet, dass** die untere Grenze des Phasenwinkels ($\varphi_{min}$) dem Zündwinkel ($\varphi_z$) für einen Zündimpuls zur Kommutierung von der ersten Phase (U) auf die zweite Phase (V) entspricht.

**5.** Verfahren nach einem der Ansprüche 2 bis 4, **dadurch gekennzeichnet, dass** die obere Grenze

($\varphi_{max}$) im Wesentlichem dem Wert des Phasenwinkels entspricht, bei dem die erste Phase (U) und die zweite Phase (V) den selben Spannungswert aufweisen.

6. Verfahren nach einem der Ansprüche 2 bis 5, **dadurch gekennzeichnet, dass** die obere Grenze für den Phasenwinkel maximal 30° nach dem Zündwinkel ($\varphi_z$) liegt.

7. Verfahren nach einem der Ansprüche 2 bis 6, **dadurch gekennzeichnet, dass** die Löschvorrichtung (LOV) aktiviert wird, wenn die gemessene Fläche ($A_{gem}$) um einen bestimmten Betrag kleiner als die theoretische Fläche ($A_{the}$) ist.

8. Verfahren nach einem der Ansprüche 2 bis 7, **dadurch gekennzeichnet, dass** zur Berechnung der theoretische Fläche ($A_{the}$) für die Verläufe der Phasen (U, V) Cosinus- oder Sinusverlauf für die Phasenwinkel-Abhängigkeit angenommen wird.

9. Verfahren nach einem der Ansprüche 1 bis 6, **dadurch gekennzeichnet, dass** weiters der Motor-Ausgangsgleichstrom ($i_A$) als Funktion der Zeit ermittelt wird, die zweite Ableitung des Ausgangsgleichstroms ($i_A$) nach der Zeit gebildet wird, und für den Fall, dass die zweite Ableitung in einem Bereich zwischen zwei aufeinanderfolgenden Zündzeitpunkten ($t_{z1}$, $t_{z2}$; $t_{z2}$, $d_{z3}$; $t_{z3}$, $t_{z4}$) einen Wert größer oder gleich Null annimmt, die Löschvorrichtung (LOV) aktiviert wird.

10. Verfahren zur Steuerung einer Löschvorrichtung (LOV) für eine rückspeisende Stromrichterbrücke (SRB), wobei die von einer netzsynchronen Ansteuerschaltung (AST) mit Zündimpulsen angesteuerte Stromrichterbrücke mit ihren drei Eingängen (1U1, 1V1, 1W1) an die Phasen (U, V, W) eines Drehstromnetzes angeschlossen ist und die beiden Ausgänge (1C1, 1D1) der Brücke zu einem Gleichstrommotor (MOT) geführt sind, welcher im generatorischen Betrieb über die Brücke in das Drehstromnetz rückspeist, und die Löschvorrichtung von einer Auslöseeinheit (ALE) angesteuert wird, von welcher Auslöseimpulse in Abhängigkeit von der Überwachung elektrischer und zeitlicher Größen abgegeben werden,
**dadurch gekennzeichnet, dass**
nach Abgabe etnes Zündimpulses der Motor-Ausgangsgleichstrom ($i_A$) als Funktion der Zeit ermittelt wird, die zweite Ableitung des Ausgangsgleichstroms ($i_A$) nach der Zeit gebildet wird, und für den Fall, dass die zweite Ableitung in einem Bereich zwischen zwei aufeinanderfolgenden Zündzeitpunkten ($t_{z1}$, $t_{z2}$; $t_{z2}$, $t_{z3}$; $t_{z3}$, $t_{z4}$) einen Wert größer oder gleich Null annimmt, die Löschvorrichtung (LOV) aktiviert wird.

11. Verfahren nach Anspruch 9 oder 10, **dadurch gekennzeichnet, dass** der Ausgangsgleichstrom ($i_A$) direkt motorseitig gemessen wird.

12. Verfahren nach Anspruch 9 oder 10, **dadurch gekennzeichnet, dass** der Ausgangsgleichstrom ($i_A$) aus zumindest zwei Netzströmen ( ) abgeleitet wird.

13. Verfahren nach einem der Ansprüche 1 bis 12, **dadurch gekennzeichnet, dass** der Motor-Ausgangsgleichstrom ($i_A$) ermittelt wird und die Löschvorrichtung bei einem Überschreiten eines vorgebbaren Schwellwertes ($i_{As}$) des überwachten Ausgangsgleichstroms aktiviert wird.

14. Verfahren nach Anspruch 13, **dadurch gekennzeichnet, dass** der Schwellwert ($i_{As}$) dem dreifachen Nennstrom der Stromrichterbrücke (SRB) entspricht.

15. Löschvorrichtung (LOV) für eine rückspeisende Stromrichterbrücke (SRB), wobei die von einer netzsynchronen Ansteuerschaltung (AST) mit Zündimpulsen angesteuerte Stromrichterbrücke mit ihren drei Eingängen (1U1, 1V1, 1W1) an die Phasen (U, V, W) eines Drehstromnetzes angeschlossen ist und die beiden Ausgänge (1C1, 1D1) der Brücke zu einem Gleichstrommotor (MOT) geführt sind, welcher im generatorischen Betrieb über die Brücke in das Drehstromnetz rückspeist, und die Löschvorrichtung von einer Auslöseeinheit (ALE) ansteuerbar ist, welche zur Abgabe von Auslöseimpulsen in Abhängigkeit von der Überwachung elektrischer und zeitlicher Größen eingerichtet ist, **dadurch gekennzeichnet, dass** die Löschvorrichtung (LOV) Mittel mit folgenden Funktionen umfasst:

- nach Abgabe eines Zündimpulses werden die Verläufe von zumindest zwei Phasen (U, V) des Drehstromnetzes als Funktion des Phasenwinkels ($\varphi$) über einen vorgebbaren Bereich des Phasenwinkels ($\varphi$) gemessen,
- aus dem Verlauf der beiden Phasen (U, V) wird als Funktion des Phasenwinkels ($\varphi$) eine charakteristische Kenngröße ($A_{gem}$) ermittelt,
- die ermittelte Kenngröße wird mit einer entsprechenden, theoretischen Kenngrösse ($A_{the}$) verglichen, und
- bei einem Abweichen der aus den gemessenen Werten der Phasen (U, V) ermittelten Kenngröße um einen vorgebbaren Wert von der theoretischen Kenngröße wird die Löscheinrichtung (LOV) aktiviert;
oder
- nach Abgabe eines Zündimpulses wird der Motor-Ausgangsgleichstrom ($i_A$) als Funktion der Zeit ermittelt,
- die zweite Ableitung des Ausgangsgleichstroms ($i_A$) wird nach der Zeit gebildet, und

- für den Fall, dass die zweite Ableitung in einem Bereich zwischen zwei aufeinanderfolgenden Zündzeitpunkten ($t_{z1}$, $t_{z2}$; $t_{z2}$, $t_{z3}$; $t_{z3}$, $t_{z4}$) einen Wert größer oder gleich Null annimmt, die Löschvorrichtung (LOV) aktiviert wird.

16. Löschvorrichtung nach Anspruch 15, **dadurch gekennzeichnet, dass** die Löschvorrichtung (LOV) für jede Brückenhälfte (V11, V13, V15; V11', V13', V15' bzw. V14, V16, V12; V14', V16', V12') einen von einer Ladeschaltung (R1, S1, R2, S2 bzw. R3, S3, R4, S4) auf eine definierte Löschspannung aufladbaren Löschkondensator (C1 bzw. C2) besitzt, und die Löschkondensatoren im Löschfall mit Hilfe von der Auslöseeinheit (ALE) angesteuerter Schalter (V31, V32, V39 bzw. V34, V33, V40) an die Brückenhälften schaltbar sind.

## Claims

1. Method for control of a quenching device (LOV) for a converter bridge with line regeneration (SRB), whereby the converter bridge controlled by a network-timed control circuit (AST) with ignition pulses is connected with its three inputs (1U1, 1V1, 1W1) to the phases (U, V, W) of a three-phase network and the two outputs (1C1, 1D1) of the bridge are connected to a direct-current motor (MOT) which, when operated as a generator, feeds current back into the three-phase network via the bridge, and the quenching device is controlled by a trigger unit (ALE) which emits trigger pulses depending on the monitoring of electrical and temporal variables, **characterised in that**,
   after an ignition pulse is issued, the waveforms of at least two phases (U, V) of the three-phase network as a function of the phase angle ($\varphi$) are measured over a predeterminable area of the phase angle ($\varphi$), a characteristic value is determined from the waveform of the two phases (U, V) as a function of the phase angle ($\varphi$), the determined characteristic value ($A_{gem}$) is compared to a corresponding, theoretical characteristic value ($A_{the)}$ , and if the characteristic value ($A_{gem}$) determined from the measured values of the phases (U, V) deviates by a predeterminable value from the theoretical characteristic value, the quenching device (LOV) is activated.

2. Method according to claim 1, **characterised in that** the characteristic value is a level ($A_{gem}$, $A_{the}$) which is limited by the waveforms of the phases (U, V), with the level being calculated between a predeterminable lower phase angle ($\varphi_{min}$) and a predeterminable upper phase angle ($\varphi_{max}$).

3. Method according to claim 2, **characterised in that** the level ($A_{gem}$, $A_{the}$) is calculated according to the formula

$$A_{gem,the} = \int_{\varphi_{min}}^{\varphi_{max}} (V - U)d\varphi \quad .$$

4. Method according to claim 2 or 3, **characterised in that** the lower limit of the phase angle ($\varphi_{min}$) corresponds to the ignition angle ($\varphi_z$) for an ignition pulse for commutation of the first phase (U) to the second phase (V).

5. Method according to one of the claims 2 to 4, **characterised in that** the upper limit ($\varphi_{max}$) essentially corresponds to the value of the phase angle at which the first phase (U) and the second phase (V) have the same voltage value.

6. Method according to one of the claims 2 to 5, **characterised in that** the upper limit for the phase angle lies at a maximum of 30° after the ignition angle ($\varphi_z$).

7. Method according to one of the claims 2 to 6, **characterised in that** the quenching device (LOV) is activated if the measured level ($A_{gem}$) is smaller by a specific amount than the theoretical level ($A_{the}$).

8. Method according to one of the claims 2 to 7, **characterised in that**, for calculating the theoretical level ($A_{the}$) for the waveforms of the phases (U, V), cosine or sine wave forms are assumed for the phase angle dependency.

9. Method according to one of the claims 1 to 6, **characterised in that** furthermore the motor output direct current ($I_A$) is determined as a function of the time, the second derivation of the output direct current ($I_A$) is formed according to time, and for the case in which the second derivation in an area between two consecutive ignition times ($t_{z1}$, $t_{z2}$; $t_{z2}$, $t_{z3}$; $t_{z3}$, $t_{z4}$) assumes a value equal to or greater than zero, the quenching device (LOV) is activated.

10. Method for control of a quenching device (LOV) for a converter bridge with line regeneration (SRB), whereby the converter bridge controlled by a network-timed control circuit (AST) with ignition pulses is connected with its three inputs (1U1, 1V1, 1W1) to the phases (U, V, W) of a three-phase network and the two outputs (1C1, 1D1) of the bridge are connected to a direct-current motor (MOT) which, when operated as a generator, feeds current back into the three-phase network via the bridge, and the quenching device is controlled by a trigger unit (ALE) which emits trigger pulses depending on the monitoring of electrical and temporal variables, **characterised in that**,

after an ignition pulse is issued, the motor output direct current ($I_A$) is determined as a function of the time, the second derivation of the output direct current ($I_A$) is formed according to time, and for the case in which the second derivation in an area between two consecutive ignition times ($t_{z1}$, $t_{z2}$; $t_{z2}$, $t_{z3}$; $t_{z3}$, $t_{z4}$) assumes a value equal to or greater than zero, the quenching device (LOV) is activated.

11. Method according to claim 9 or 10, **characterised in that** the output direct current ($I_A$) is measured directly on the motor side.

12. Method according to claim 9 or 10, **characterised in that** the output direct current ($I_A$) is derived from at least two network currents ( ).

13. Method according to one of the claims 1 to 12, **characterised in that** the motor output direct current ($I_A$) is determined and the quenching device is activated if a predeterminable threshold value ($I_{AS}$) of the monitored output direct current is exceeded.

14. Method according to claim 13, **characterised in that** the threshold value ($I_{AS}$) corresponds to three times the rated current of the converter bridge (SRB).

15. Quenching device (LOV) for a converter bridge with line regeneration (SRB), whereby the converter bridge controlled by a network-time control circuit (AST) with ignition pulses is connected with its three inputs (1U1, 1V1, 1W1) to the phases (U, V, W) of a three-phase network and the two outputs (1C1, 1D1) of the bridge are connected to a direct-current motor (MOT) which, when operated as a generator, feeds current back into the three-phase network via the bridge, and the quenching device is controlled by a trigger unit (ALE) which emits trigger pulses depending on the monitoring of electrical and temporary variables, **characterised in that** the quenching device (LOV) includes means with the following function:

- after an ignition pulse has been issued the waveforms of at least two phases (U, V) of the three-phase network are measured as a function of the phase angle ($\varphi$)) over a predeterminable range of the phase angle ($\varphi$),
- from the waveform of the two phases (U, V) a characteristic value ($A_{gem}$) is determined as a function of the phase angle ($\varphi$),
- the characteristic value determined is compared to a corresponding, theoretical characteristic value ($A_{the}$), and
- if the characteristic value determined from the measured values of the phases (U, V) deviates by a predeterminable value from the theoretical characteristic value, the quenching device (LOV) is activated;

or

- after an ignition pulse is issued the motor output direct current (IA) is determined as a function of the time,
- the second derivation of the output direct current ($I_A$) is formed according to the time, and
- in the event of the second derivation, in a range between two consecutive ignition times ($t_{z1}$, $t_{z2}$; $t_{z2}$, $t_{z3}$; $t_{z3}$, $t_{z4}$) assuming a value equal to or greater than zero, the quenching device (LOV) is activated.

16. Quenching device according to claim 15, **characterised in that** the quenching device (LOV) for each half of the bridge (V11, V13, V15; V11', V13', V15' or V14, V16, V12; V14', V16', V12') possesses a quenching capacitor (C1 or C2) able to be charged by a charge circuit (R1, S1, R2, S2 or R3, S3, R4, S4) to a defined quenching voltage, and the quenching capacitors are able to be connected to the halves of the bridge for quenching with the aid of switches (V31, V32, V39 or V34, V33, V40) activated by the trigger unit (ALE).

**Revendications**

1. Procédé pour la commande d'un dispositif d'extinction (LOV) pour un pont redresseur (SRB) d'alimentation retour, le pont redresseur activé par un circuit d'activation (AST) synchrone au niveau du réseau avec des impulsions d'allumage étant raccordé par ses trois entrées (1U1, 1V1, 1W1) aux phases (U, V, W) d'un réseau triphasé et les deux sorties (1C1, 1D1) du pont étant amenées vers un moteur à courant continu (MOT), lequel moteur procède à une alimentation retour pendant le fonctionnement en mode générateur via le pont dans le réseau triphasé, et le dispositif d'extinction étant activé par une unité de déclenchement (ALE), par lequel des impulsions de déclenchement sont délivrées en fonction de la surveillance de grandeurs électriques et temporelles,

**caractérisé en ce que**

après la délivrance d'une impulsion d'allumage, les courbes d'au moins deux phases (U, V) du réseau triphasé sont mesurées en fonction de l'angle de phase ($\varphi$) sur une plage prédéfinissable de l'angle de phase ($\varphi$), un paramètre caractéristique est déterminé à partir de la courbe des deux phases (U, V) en fonction de l'angle de phase ($\varphi$), le paramètre ($A_{gem}$) déterminé est comparé avec un paramètre ($A_{the}$) théorique correspondant, et, dans le cas d'un écart du paramètre ($A_{gem}$) déterminé à partir des valeurs mesurées des phases (U, V) d'une valeur prédéfinissable par rapport au paramètre théorique, le dispositif d'extinction (LOV) est activé.

2. Procédé selon la revendication 1, **caractérisé en ce que** le paramètre est une surface ($A_{gem}$, $A_{the}$) qui est limitée par les courbes des phases (U, V), la surface entre un angle de phase ($\varphi_{min}$) inférieur prédéfinissable et un angle de phase ($\varphi_{max}$) supérieur prédéfinissable étant calculée.

3. Procédé selon la revendication 2, **caractérisé en ce que** la surface ($A_{gem}$, $A_{the}$) est calculée selon la formule suivante

$$A_{gem,the} = \int_{\varphi_{min}}^{\varphi_{max}} (V - U)\,d\varphi$$

4. Procédé selon la revendication 2 ou 3, **caractérisé en ce que** la limite inférieure de l'angle de phase ($\varphi_{min}$) correspond à l'angle de phase ($\varphi_z$) pour une impulsion d'allumage pour la commutation de la première phase (U) sur la deuxième phase (V).

5. Procédé selon l'une quelconque des revendications 2 à 4, **caractérisé en ce que** la limite ($\varphi_{max}$) supérieure correspond sensiblement à la valeur de l'angle de phase, à laquelle la première phase (U) et la seconde phase (V) présentent la même valeur de tension.

6. Procédé selon l'une quelconque des revendications 2 à 5, **caractérisé en ce que** la limite supérieure pour l'angle de phase est au maximum à 30° après l'angle d'allumage ($\varphi_z$).

7. Procédé selon l'une quelconque des revendications 2 à 6, **caractérisé en ce que** le dispositif d'extinction (LOV) est activé lorsque la surface mesurée ($A_{gem}$) est inférieure d'une valeur définie à la surface théorique ($A_{the}$).

8. Procédé selon l'une quelconque des revendications 2 à 7, **caractérisé en ce que**, pour calculer la surface théorique ($A_{the}$) pour les courbes des phases (U, V), on admet une courbe de cosinus ou de sinus pour la dépendance vis-à-vis de l'angle de phase.

9. Procédé selon l'une quelconque des revendications 1 à 6, **caractérisé en ce qu'**également le courant continu de sortie du moteur ($i_A$) est déterminé en fonction du temps, la seconde dérivée du courant continu de sortie ($i_A$) par rapport au temps est formée, et dans le cas où la seconde dérivée prend une valeur supérieure ou égale à zéro dans une plage comprise entre deux moments d'allumage consécutifs ($t_{z1}$, $t_{z2}$ ; $t_{z2}$, $t_{z3}$ ; $t_{z3}$, $t_{z4}$), le dispositif d'extinction (LOV) est activé.

10. Procédé pour commander un dispositif d'extinction (LOV) pour un pont redresseur d'alimentation retour (SRB), le pont redresseur activé par un circuit d'activation (AST) synchrone au niveau du réseau avec des impulsions d'allumage étant raccordé par ses trois entrées (1U1, 1V1, 1W1) aux phases (U, V, W) d'un réseau triphasé et les deux sorties (1C1, 1D1) du pont étant amenées vers un moteur à courant continu (MOT) lequel, moteur procède à une alimentation retour pendant le fonctionnement en mode générateur, via le pont dans le réseau triphasé, et le dispositif d'extinction est activé par une unité de déclenchement (ALE), par laquelle des impulsions de déclenchement sont délivrées en fonction de la surveillance de grandeurs électriques et temporelles, **caractérisé en ce que** après la délivrance d'une impulsion d'allumage, le courant continu de sortie de moteur ($i_A$) est déterminé en fonction du temps, la seconde dérivée du courant continu de sortie ($i_A$) par rapport au temps est formée, et dans le cas où la seconde dérivée prend une valeur supérieure ou égale à zéro dans une plage comprise entre deux moments d'allumage consécutifs ($t_{z1}$, $t_{z2}$ ; $t_{z2}$, $t_{z3}$ ; $t_{z3}$, $t_{z4}$), le dispositif d'extinction (LOV) est activé.

11. Procédé selon la revendication 9 ou 10, **caractérisé en ce que** le courant de sortie ($i_A$) est mesuré directement côté moteur.

12. Procédé selon la revendication 9 ou 10, **caractérisé en ce que** le courant continu de sortie ($i_A$) est déduit d'au moins deux courants de réseau ().

13. Procédé selon l'une quelconque des revendications 1 à 12, **caractérisé en ce que** le courant continu de sortie de moteur ($i_A$) est déterminé et le dispositif d'extinction est activé dans le cas d'un dépassement d'une valeur seuil ($i_{AS}$) prédéfinissable du courant continu de sortie surveillé.

14. Procédé selon la revendication 13, **caractérisé en ce que** la valeur seuil ($i_{AS}$) correspond au courant nominal triple du pont redresseur (SRB).

15. Dispositif d'extinction (LOV) pour un circuit redresseur d'alimentation retour (SRB), le pont redresseur activé par un circuit d'activation (AST) synchrone au niveau du réseau avec des impulsions d'allumage étant raccordé par ses trois entrées (1U1, 1V1, 1W1) aux phases (U, V, W) d'un réseau triphasé et les deux sorties (1C1, 1D1) du pont étant amenées vers un moteur à courant continu (MOT), lequel moteur procède à une alimentation retour pendant le fonctionnement en mode générateur, via le pont dans le réseau triphasé générateur, et le dispositif d'extinction pouvant être activé par une unité de déclenchement (ALE) qui est aménagée pour délivrer des impulsions de déclenchement en fonction de la surveillance de grandeurs électriques et temporelles, **caractérisé en ce que** le dispositif d'extinction (LOV) comprend des moyens présentant les fonctions suivante :

    - après la délivrance d'une impulsion d'allumage, les courbes d'au moins deux phases (U, V) du réseau triphasé sont mesurées en fonction de l'angle de phase ($\varphi$) sur une plage prédéfinissable de l'angle de phase ($\varphi$),
    - à partir de la courbe des deux phases (U, V), un paramètre ($A_{gem}$) caractéristique est déterminé en fonction de l'angle de phase ($\varphi$) ,
    - le paramètre déterminé est comparé avec un paramètre ($A_{the}$) théorique correspondant, et
    - dans le cas d'un écart du paramètre déterminé à partir des valeurs mesurées des phases (U, V) une valeur prédéfinissable par rapport au paramètre théorique, le dispositif d'extinction (LOV) est activé ;

ou

    - après délivrance d'une impulsion d'allumage, le courant continu de sortie de moteur ($i_A$) est détermine en fonction du temps,
    - la seconde dérivée du courant continu de sortie ($i_A$) est formée en fonction du temps, et
    - dans le cas où la seconde dérivée prend une valeur supérieure ou égale à zéro dans une plage située entre deux moments d'allumage consécutifs ($t_{z1}$, $t_{z2}$ ; $t_{z2}$, $t_{z3}$ ; $t_{z3}$, $t_{z4}$) , le dispositif d'extinction (LOV) est activé

16. Dispositif d'extinction selon la revendication 15, **caractérisé en ce que** le dispositif d'extinction (LOV) présente pour chaque moitié de pont (V11, V13, V15 ; V11', V13', V15' resp. V14, V16, V12 ; V14', V16', V12') un condensateur d'extinction (C1 resp. C2) pouvant être chargé par un circuit de charge (R1, S1, R2, S2 ou R3, S3, R4, S4) sur une tension d'extension définie et les condensateurs d'extinction peuvent être commutés en cas d'extinction à l'aide de l'unité de déclenchement (ALE) d'interrupteurs activés (V31, V32, V39 resp. V34, V33, V40) sur les moitiés de pont.

Fig. 1

EP 1 766 770 B1

FIG. 2a

FIG. 2b

FIG. 3

EP 1 766 770 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4449087 A
- AT 404414 B